**Europäisches Patentamt**

(19) **European Patent Office**

**Office européen des brevets**

(11) Numéro de publication: **0 176 463**
**B1**

(12) # FASCICULE DE BREVET EUROPÉEN

(45) Date de publication du fascicule du brevet:
31.05.89

(51) Int. Cl.⁴: **A 01 K 73/06,** B 66 D 1/74

(21) Numéro de dépôt: **85460015.2**

(22) Date de dépôt: **27.09.85**

(54) **Appareil de halage d'un câble.**

(30) Priorité: **28.09.84 FR 8415074**

(43) Date de publication de la demande:
**02.04.86 Bulletin 86/14**

(45) Mention de la délivrance du brevet:
**31.05.89 Bulletin 89/22**

(84) Etats contractants désignés:
**BE DE GB IT NL SE**

(56) Documents cité:
**GB-A-1 068 251**
**GB-A-1 368 157**
**GB-A-1 588 850**
**US-A-3 018 934**
**US-A-3 329 406**
**US-A-3 469 819**
**US-A-3 608 389**
**US-A-4 139 178**
**US-A-4 165 830**

(73) Titulaire: **HYDROMARINE (SARL), Z.I. de
Parc'Hastel, F-29170 Fouesnant (FR)**

(72) Inventeur: **Bertholom, Yves Laurent Marie, Route
de Kergarrec, F-29118 Benodet (FR)**

(74) Mandataire: **Martin, Jean- Jacques, Cabinet
REGIMBEAU Corre, Martin, Schrimpf, Warcoin,
Ahner 11, rue Franz Heller, F-35700 Rennes (FR)**

EP 0 176 463 B1

LIBER, STOCKHOLM 1989

## Description

La présente invention concerne un appareil de halage d'un câble tel qu'une ligne pour la pêche, une palangre ou similaire.

Sur les bateaux de pêche d'une certaine importance, on remonte les lignes de pêche, les palangres, les filières à casiers ou autres cordages, non plus manuellement, mais au moyen d'appareils mécaniques motorisés fixés sur le bateau, généralement à l'avant.

On connaît des appareils du genre mentionné dans lesquels la roue motrice, entraînée par un moteur hydraulique, est une poulie à gorge, dont la gorge a une section en V. Le câble se coince automatiquement dans la gorge en raison de sa tension propre, ce qui permet son halage. A la sortie de la poulie, un doigt extracteur assure son retrait hors de la gorge.

Les appareils de ce type sont relativement simples et peu coûteux. Ils présentent toutefois l'inconvénient de s'adapter à une gamme peu étendue de diamètres de câbles. Si le câble est trop gros, il ne se coince pas suffisamment dans la poulie à gorge et va patiner au cours du halage; s'il est trop fin, il se coince excessivement et son éjection se fera difficilement. Par ailleurs, ce type d'appareil conduit à une usure excessivement rapide des câbles, lesquels sont généralement réalisés en nylon tressé.

Le document US-A-3 608 389 concerne un appareil de halage d'un câble dans lequel la force de retenue du câble varie automatiquement dans le même sens que la charge tractée par le câble. A cet effet, le câble est maintenu appliqué contre une poulie motrice par un organe presseur mobile, ce dernier étant monté sur un levier articulé agencé pour être sollicité de façon proportionnelle à la charge tractée. Un appareil de ce type est naturellement mal adapté pour le halage d'une ligne de pêche ou d'une palangre, un débrayage automatique étant au contraire souhaitable lorsque la charge sur le câble devient excessive, en particulier par suite de l'accrochage de la ligne avec un rocher ou un autre obstacle. Dans la variante représentée à la figure 5 de ce document, l'organe presseur consiste en une bande sans fin coopérant avec une poulie à gorge, sur un secteur angulaire faible, de l'ordre de 90 degrés.

Cet appareil présente donc aussi les inconvénients qui viennent d'être évoqués, inhérents à l'utilisation d'une poulie à gorge. Par ailleurs, la longueur d'arc du secteur angulaire sur laquelle la bande coopère avec le câble, est insuffisante pour permettre un entraînement correct du câble, surtout si celui-ci présente des noeuds ou autres irrégularités telles que l'on rencontre sur des lignes de pêche.

On connaît également des appareils de halage qui comprennent plusieurs roues servant au guidage et à l'entraînement du câble et dont l'une au moins est garnie d'un revêtement en caoutchouc; le câble est appliqué contre cette dernière par d'autres roues de telle sorte qu'il est entraîné par friction. Ce type d'appareil présente l'inconvénient qu'il ne couvre pas non plus une gamme étendue de diamètres de câble, à moins de prévoir sur l'appareil des systèmes de réglage de certaines roues, ce qui d'une part augmente considérablement le prix de revient de l'appareil, diminue sa robustesse et constitue une contrainte supplémentaire pour l'utilisateur. En outre, les noeuds de raccordement du câble aux lignes secondaires qui portent les hameçons ou les casiers de pêche sont relativement volumineux et passent mal entre les divers rouleaux d'entraînement, ce qui provoque des à-coups dans le halage, des risques de coincement et de détérioration du câble et/ou de l'appareil.

L'invention se propose de réaliser un appareil de halage de câble, notamment de lignes pour la pêche et de palangres qui ne présente pas les inconvénients relevés sur les dispositifs antérieurs, tout en étant simple, robuste, et bon marché.

A cet effet, l'appareil objet de la présente invention, qui, comme l'appareil décrit dans US-A-3 608 389, comprend une bande sans fin coopérant avec une roue motrice pour entraîner le câble par friction, cette bande sans fin étant guidée par des galets de renvoi dont l'un au moins est mobile et est sollicité par un ressort de manière à ce que la bande sans fin entoure partiellement la roue motrice en appliquant le câble élastiquement contre une partie de la circonférence de cette roue, est caractérisé par le fait que la surface externe de ladite roue motrice est revêtue d'une garniture souple et possède une forme cylindrique ou légèrement incurvée concave, et que ladite bande sans fin applique le câble contre la roue motrice sur la moitié au moins de sa circonférence, cette bande sans fin possédant une largeur et une souplesse qui lui permettent de recouvrir complètement la portion de câble passant sur la roue motrice tout en s'adaptant aux différents diamètres et aux irrégularités éventuelles de ce câble.

On comprendra aisément que, grâce à la souplesse de la bande, celle-ci va épouser le contour du câble et l'appliquer correctement contre la roue motrice, même à l'endroit où le câble présente des noeuds ou des irrégularités. On comprendra aussi que la bande pourra s'adapter sans réglage à des diamètres de câble très différents.

Pour obtenir un halage puissant, sans patinage du câble sur la roue motrice, il est essentiel que le contact de la bande sans fin avec la roue motrice soit assuré sur un secteur angulaire étendu, avantageusement supérieur à 180° (demi-circonférence), et de préférence compris entre 220 et 300°, par exemple de l'ordre de 250°. En effet, l'adhérence du câble avec la roue motrice est proportionnelle à la longueur d'arc le long de laquelle ce contact est réalisé.

Dans une forme de réalisation préférentielle de l'appareil, l'un au moins des galets de renvoi est mobile et est sollicité par un ressort de manière à presser élastiquement la bande sans fin contre la roue motrice cet arrangement permet d'améliorer encore la faculté d'adaptation de la bande souple aux irrégularités de forme et aux différences de diamètre du câble. Le ressort qui sollicite le galet mobile a avantageusement une dureté réglable, ce qui permet d'adapter l'appareil à des efforts de halage, c'est-à-dire à des forces de traction sur le câble, qui sont très variées.

La mobilité du galet est obtenue par exemple par le fait que le galet est porté par un levier articulé sur lequel agit le ressort; l'axe d'articulation du levier peut être constitué par l'axe de rotation d'un autre galet de renvoi.

La roue motrice peut être de forme cylindrique; toutefois elle a avantageusement une surface externe légèrement incurvée concave, de manière à assurer un centrage automatique du câble et de la bande souple au cours de sa rotation.

L'appareil est pourvu de préférence d'une roue à gorge adaptée pour guider le câble à son entrée dans l'appareil.

D'autres caractéristiques et avantages de l'invention apparaîtront de la description et des dessins annexés qui présentent un mode de réalisation préférentiel de l'invention.

La Fig. 1 est une vue de face de l'appareil, avec arrachement partiel d'une partie du bâti.

La Fig. 2 est une vue de côté de l'appareil, partiellement coupée par le plan brisé II - II de la figure 1.

L'appareil représenté sur les dessins comprend un bâti constitué d'une plaque verticale 1 et d'un socle horizontal 2 qui est muni de trous 3 destinés à permettre la fixation sur le bateau. Sur l'un de ses côtés, la plaque-support 1 est pourvue d'une console de fixation 4 pour un moteur hydraulique M de type connu. De l'autre côté de la plaque verticale 1 sont montés, en porte-à-faux sur leur axe, une roue 5, une série de quatre galets 6a, 6b, 6c, 6d, et une poulie à gorge 7.

Chacune de ces roues est montée à rotation sur un axe qui est porté par la plaque 1 de manière connue, et est disposée horizontalement, perpendiculairement à cette plaque.

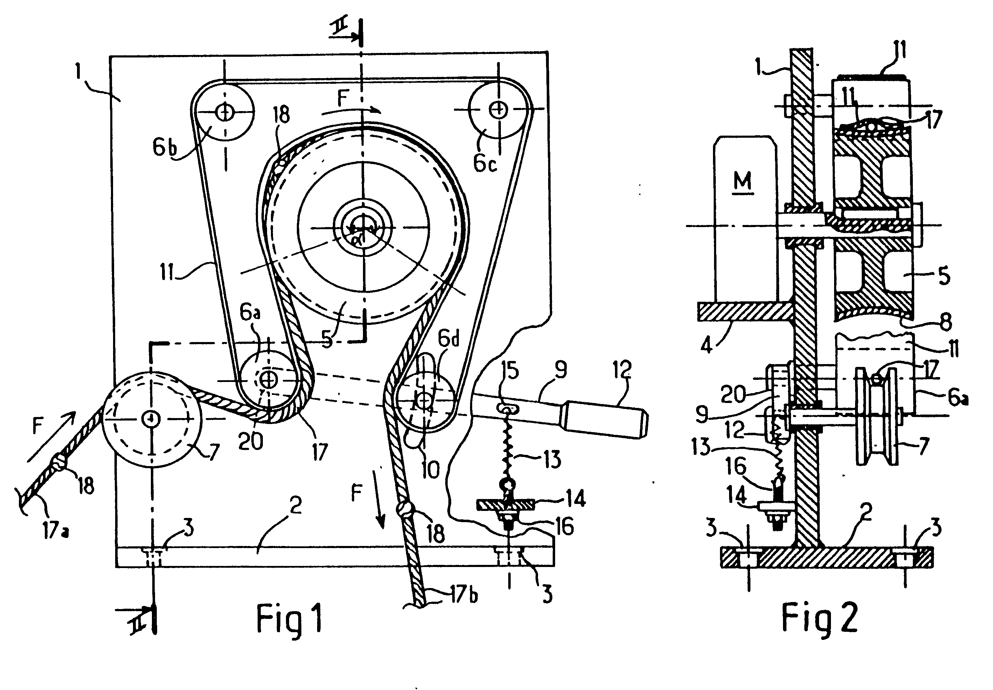

La roue 5 est calée, directement ou indirectement, sur l'arbre de sortie du moteur M. Elle est revêtue sur sa surface externe d'une couche mince 8 en matériau souple, élastique, mécaniquement résistant, et présentant un coefficient de frottement élevé; il s'agit par exemple d'un caoutchouc vulcanisé. Comme on le voit sur la figure 2, la face externe de la roue 5 et, corrélativement la face externe de la couche 8, ont une section légèrement incurvée concave. Les galets 6a, 6b, 6c, 6d, sont montés fous sur leur axe et sont disposés aux quatre coins d'un quadrilatère présentant approximativement la forme d'un trapèze et entourant la roue 5. L'un des galets 6d n'est pas monté directement sur la plaque de bâti 1, mais est monté sur un levier articulé 9. Le levier 9 est situé du côté de la plaque 1 opposé au galet. L'axe du galet 6d traverse la plaque 1 à travers une ouverture arquée allongée 10, en forme de lumière, ménagée dans cette plaque. Le levier 9 est articulé autour du prolongement 20 de l'axe du galet 6a. Le levier 9 est équipé à son extrémité extérieure au bâti 1 d'une poignée de manoeuvre 12. L'appareil comporte une bande sans fin souple désignée par la référence 11 sur les figures. Cette bande est guidée sur les galets 6a, 6b, 6c, 6d, et sur la roue motrice 5 de manière à entourer cette dernière sur une partie importante de sa circonférence, ainsi qu'on le voit sur la figure 1. L'angle α suivant lequel la bande 11 est en contact avec le revêtement 8 de la roue 5 est de 250° environ. La bande 11 est une bande analogue aux courroies de transmission de commerce; elle est réalisée par exemple en tissu caoutchouté ou en tissu imprégné de résine. Elle présente un coefficient de frottement élevé. La plaque 1 est munie d'une patte d'attache 14 disposée du côté du levier 9, en dessous de la partie médiane de celui-ci. Un ressort de traction 13 disposé verticalement est accroché à sa partie supérieure 15 au levier 9 et à sa partie inférieure à la patte d'attache 14. Cet accrochage inférieur est réalisé par l'intermédiaire d'un boulon de réglage 16 dont la manoeuvre permet de régler la tension du ressort 13. Le ressort 13 sollicite le levier 9 de manière à faire pivoter celui-ci autour de l'axe 6d vers le bas, c'est-à-dire de manière à tendre la bande 11 autour de la roue 5. Le débattement du levier 9 est autorisé par la présence de la lumière arquée 10 dont le centre de courbure est situé sur l'axe 20. Le câble halé par l'appareil a été désigné par la référence 17 sur les figures. Il s'agit d'un câble cylindrique réalisé par exemple en fils de nylon tressés. Ce câble présente des noeuds 18 répartis de manière espacée; ces noeuds 18 correspondent à des attaches avec des lignes secondaires (non représentées) qui portent des hameçons ou des casiers. Le brin de câble sortant de l'eau et, par conséquent, entrant dans l'appareil, est désigné par la référence 17a; le brin destiné à être posé sur le bateau, c'est-à-dire le brin quittant l'appareil a été désigné par la référence 17b. Le sens de déplacement du câble 17 dans l'appareil est figuré par les flèches F. Le câble passe tout d'abord sur la poulie à gorge 7, puis sous la poulie de renvoi 6a, puis autour de la roue 5, puis contre la poulie 6d. Autour de la roue 5, le câble 17 est recouvert par la bande souple 11 et fortement appliqué contre le revêtement 8 en raison de la tension de cette bande sans fin 11, tension exercée par le ressort 13. Le câble 17 adhère par conséquent à la fois au revêtement 8 et à la bande souple 11, si bien que le moteur M entraîne en bloc la roue motrice 5, la bande sans fin 11 et le câble 17. Grâce à sa souplesse, la bande souple 11 s'adapte facilement aux irrégularités éventuelles du câble, et notamment aux noeuds 18; elle s'adapte également à différents diamètres de câble sans réglage préalable. La roue à gorge 7 sert à retenir le câble latéralement lorsque celui-ci entre dans l'appareil afin d'éviter qu'il ne s'échappe intempestivement sur le côté. Cette retenue latérale est encore améliorée en raison de la forme concave de la poulie 5 qui assure un rôle de centrage automatique du câble et de la bande sans fin.

Toutefois, l'expérience à montré qu'il n'était pas nécessaire de donner à la surface extérieure de la roue motrice 5 une forme incurvée; avec une roue parfaitement cylindrique, on obtient une retenue correcte du câble en direction latérale grâce à la présence de la roue à gorge 7. En manoeuvrant le levier 9 vers le haut, on peut provoquer la détente de la bande sans fin 11, ce qui permet de retirer ou d'introduire le câble latéralement dans l'appareil si on le souhaite, notamment en début et en fin d'opération. La largeur de la bande souple 11 est de préférence légèrement inférieure à celle de la roue motrice 5 (et des galets 6a, 6b, 6c, 6d), ce qui facilite la mise en place du câble latéralement dans l'appareil, entre la roue et la bande souple. La roue motrice équipant l'appareil qui vient d'être décrit possède un diamètre de 240 mm environ tandis que les galets 6a, 6b, 6c, 6d, ainsi que le fond de gorge de la poulie 7, ont un diamètre de 80 mm environ. L'ensemble des roues a une largeur de l'ordre de 100 à 150 mm; par exemple de 120 mm. Ces dimensions sont données à titre indicatif, mais nullement limitatif. Cet appareil permet de haler des câbles dont le diamètre est situé dans une plage comprise entre 1 et 15 mm environ. Avec un ressort de dureté 20 decaNewton, il est possible de haler des câbles qui sont soumis a une tension pouvant atteindre 600 decaNewton.

L'appareil permet aussi le halage de filets de pêche.

Il va de soi que l'invention n'est pas limitée au mode de réalisation préférentiel qui vient d'être décrit à simple titre d'exemple; elle en embrasse, au contraire, toutes les variantes couvertes par le concept revendiqué. En particulier, il serait possible de prévoir un emplacement différent des roues et galets sur leur bâti. L'ensemble pourrait, par exemple, être décalé angulairement par rotation de 90° dans un plan vertical, de sorte que la roue à gorge 7 soit située à la partie supérieure de l'appareil et les galets 6b, 6c à l'arrière de celui-ci.

### Revendications

1. Appareil de halage d'un câble tel qu'une ligne pour la pêche ou une palangre, qui comprend une bande sans fin coopérant avec une roue motrice pour entraîner le câble par friction, cette bande sans fin étant guidée par des galets de renvoi dont l'un au moins est mobile et est sollicité par un ressort de manière à ce que la bande sans fin (11) entoure partiellement la roue motrice (5) en appliquan le câble (17) élastiquement contre une partie de la circonférence de cette roue (5), caractérisé par le fait que la surface externe de ladite roue motrice (5) est revêtue d'une garniture souple (8) et possède une forme cylindrique ou légèrement incurvée concave, et que ladite bande sans fin (11) applique le câble contre la roue motrice (5) sur la moitié au moins de sa circonférence, cette bande sans fin (11) possédant une largeur et une souplesse qui lui permettent de recouvrir complètement la portion de câble (17) passant sur la roue motrice (5) tout en s'adaptant aux différents diamètres et aux irrégularités éventuelles (18) de ce câble (17).

2. Appareil de halage selon la revendication 1, caractérisé par le fait que la bande sans fin (11) est guidée par quatre galets de renvoi (6a, 6b, 6c, 6d) et qu'elle entoure la roue motrice (5) sur un secteur angulaire (α) compris entre 220 et 300 degrés, de préférence de l'ordre de 250 degrés.

3. Appareil selon l'une des revendications 1 ou 2, caractérisé par le fait qu'il comprend des moyens (16), tels qu'un boulon, permettant de régler la force du ressort (13) qui sollicite le galet de renvoi mobile (6d).

4. Appareil selon l'une des revendications 1 à 3, caractérisé par le fait que le galet de renvoi mobile (6d) est porté par un levier articulé (9) auquel est accroché le ressort (13), ce levier (9) présentant une extrémité libre qui forme poignée de manoeuvre (12) et permet de provoquer la détente de la bande sans fin (11).

5. Appareil selon l'une des revendications 1 à 4, caractérisé par le fait qu'il est pourvu d'une roue à gorge (7) adaptée pour guider le câble (17) à son entrée dans l'appareil.

### Patentansprüche

1. Zugvorrichtung für ein Seil, wie beispielsweise ein Fischereiseil oder eine Leine mit Schwimmern, enthaltend ein endloses Band, das mit einem Antriebsrad zusammenwirkt, um das Seil durch Reibung mitzunehmen, und das durch Umlenkräder geführt ist, von denen wenigstens eines verstellbar und durch eine Feder derart beaufschlagt ist, daß das endlose Band (11) teilweise das Antriebsrad (5) umgibt, wobei es das Seil (17) elastisch gegen einen Teil des Umfangs dieses Rades (5) drückt, <u>dadurch gekennzeichnet</u>, daß die Umfangsfläche des genannten Antriebsrades (5) mit einer weichen Beschichtung (8) bedeckt ist und eine zylindrische oder leicht konkav nach innen gewölbte Gestalt hat und daß das endlose Band (11) das Seil gegen das Antriebsrad (5) über wenigstens die Hälfte seines Umfangs drückt, wobei das endlose Band (11) eine Breite und eine Geschmeidigkeit aufweist, die es ihm erlauben, den Teil des Seils (17) vollständig zu bedecken, der über das Antriebsrad (5) läuft, wobei es sich den Durchmesserdifferenzen und den ggf. vorhandenen Unregelmäßigkeiten (18) des Seils (17) anpaßt.

2. Zugvorrichtung nach Anspruch 1, <u>dadurch</u>

gekennzeichnet, daß das endlose Band (11) durch vier Umlenkräder (6a, 6b, 6c, 6d) geführt ist und daß es das Antriebsrad (5) über einen Winkelsektor (α) umgibt, der zwischen 220 und 300 Grad, vorzugsweise in der Größenordnung von 250 Grad liegt.

3. Vorrichtung nach einem der Ansprüche 1 oder 2, dadurch gekennzeichnet, daß sie Einrichtungen (16), wie beispielsweise eine Stellschraube, enthält, die es gestatten, die Federkraft (13) zu verstellen, die gegen das verstellbare Umlenkrad (6d) drückt.

4. Vorrichtung nach einem der Ansprüche 1 bis 3, dadurch gekennzeichnet, daß das verstellbare Umlenkrad (6d) an einem Schwenkhebel (9) gelagert ist, an welchem die Feder (13) verankert ist und der ein freies Ende aufweist, das einen Verstellgriff (12) bildet und erlaubt, das endlose Band (11) zu entspannen.

5. Vorrichtung nach einem der Ansprüche 1 bis 4, dadurch gekennzeichnet, daß sie mit einem Rillenrad (7) versehen ist, das zur Führung des Seils (17) bei seinem Eintritt in die Vorrichtung bestimmt ist.

**Claims**

1. Apparatus for hauling a cable such as a line for fishing or a trawl-line, which comprises an endless belt cooperating with a drive wheel for driving the cable by friction, this endless belt being guided by return rollers whereof at least one is movable and is biased by a spring in order that the endless belt (11) partly surrounds the drive wheel (5) by pressing the cable (17) resiliently against a part of the circumference of this wheel (5), characterised by the fact that the outer surface of the said drive wheel (5) is covered with a flexible jacket (8) and has a cylindrical or slightly incurved, concave shape and that the said endless belt (11) presses the cable against the drive wheel (5) over at least half its circumference, this endless belt (11) having a width and flexibility enabling it to completely cover the portion of cable (17) passing over the drive wheel (5) whilst adapting itself to different diameters and possible irregularities (18) of this cable (17).

2. Hauling apparatus according to Claim 1, characterised by the fact that the endless belt (11) is guided by four return rollers (6a, 6b, 6c, 6d) and that it surrounds the drive wheel (5) over an angular sector (α) comprised between 220 and 300 degrees, preferably of the order of 250 degrees.

3. Apparatus according to one of Claims 1 or 2, characterised by the fact that it comprises means (16), such as a bolt, making it possible to regulate the force of the spring (13) which biases the movable return roller (6d).

4. Apparatus according to one of Claims 1 to 3, characterised by the fact that the movable return roller (6d) is supported by a pivoted lever (9), to which the spring (13) is attached, this lever (9) having a free end which forms an operating handle (12) and makes it possible to bring about slackening of the endless belt (11).

5. Apparatus according to one of Claims 1 to 4, characterised by the fact that a grooved wheel (7) is provided, adapted for guiding the cable (17) as it enters the apparatus.

Fig 1

Fig 2

EP 0 176 463 B1